(19) Europäisches Patentamt
European Patent Office
Office européen des brevets

(11) **EP 4 712 202 A2**

(12) **EUROPEAN PATENT APPLICATION**

(43) Date of publication:
**18.03.2026   Bulletin 2026/12**

(21) Application number: **26155553.6**

(22) Date of filing: **30.09.2021**

(51) International Patent Classification (IPC):
***H01M 10/42*** *(2006.01)*

(52) Cooperative Patent Classification (CPC):
**H01M 4/587; H01M 4/133; H01M 10/0525;
H01M 10/054; H01M 10/0569; H01M 10/4235;**
H01M 4/364; H01M 4/386; H01M 4/525;
H01M 10/0567; H01M 10/0568; H01M 2004/021;
H01M 2004/027; H01M 2300/0037;
H01M 2300/004;                                    (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(62) Document number(s) of the earlier application(s) in
accordance with Art. 76 EPC:
**21945367.7 / 4 184 650**

(71) Applicant: **Contemporary Amperex Technology
(Hong Kong) Limited
Central, Central And Western District (HK)**

(72) Inventors:
• **GUO, Jie**
  **Ningde, 352100 (CN)**
• **HAN, Changlong**
  **Ningde, 352100 (CN)**

• **WU, Zeli**
  **Ningde, 352100 (CN)**
• **JIANG, Bin**
  **Ningde, 352100 (CN)**

(74) Representative: **Rowlands, Stuart Michael et al
Maucher Jenkins
Seventh Floor Offices
Artillery House
11-19 Artillery Row
London SW1P 1RT (GB)**

Remarks:
This application was filed on 30-01-2026 as a
divisional application to the application mentioned
under INID code 62.

(54) **SECONDARY BATTERY, BATTERY MODULE COMPRISING SAME, BATTERY PACK, AND
ELECTRICAL DEVICE**

(57)     This application relates to a secondary battery, and a battery module, a battery pack, and an electric apparatus containing the same. The secondary battery includes: an electrolyte having a specific percentage of a low-viscosity solvent, a specific percentage of a high-dielectric-constant solvent, and a negative electrode having a negative electrode active material layer, and the secondary battery satisfies the relational expression:

$$1\times10^{-4}\leq\frac{B\times C\times P}{OI\times CW}\leq1\times10^{-3}$$, where B is the percentage of

the low-viscosity solvent in total solvent in the electrolyte by mass; C is a percentage of an electrolyte salt in the electrolyte by mass; P is a porosity of the negative electrode active material layer; CW is a coating weight of the negative electrode active material layer, measured in mg/cm$^2$; and OI is an orientation index of the negative electrode active material layer, where OI=C004/C 110, C004 is a peak area of a 004 characteristic diffraction peak in an X-ray diffraction pattern of the negative electrode active material layer, and C110 is a peak area of a 110 characteristic diffraction peak in the X-ray diffraction pattern of the negative electrode active material layer.

FIG. 1

(52) Cooperative Patent Classification (CPC): (Cont.)
     Y02E 60/10

## Description

### TECHNICAL FIELD

This application relates to the field of secondary batteries, and in particular, to a secondary battery, and a battery module, a battery pack, and an electric apparatus containing the same.

### BACKGROUND

In recent years, with increasing demand for clean energy, secondary batteries have been widely used in energy storage power systems such as a water power station, a thermal power station, a wind power station, and a solar power station, and in a plurality of fields such as electric tools, electric transportation means, military equipment, and aerospace. As the fields of application of secondary batteries have been greatly expanded, greater requirements have been put forward for their rate performance, energy density, and storage performance (especially high-temperature storage performance).

To improve battery performance such as rate performance, the following techniques have been proposed. Patent document CN113097429A describes that the electrochemical apparatus can improve rate performance of the battery without affecting energy density by adjusting a relationship between terminal potentials of negative electrode active materials of the electrochemical apparatus and excess coefficients of the electrochemical apparatus (a ratio of a capacity of a negative electrode to a capacity of a positive electrode under the condition that the negative and positive electrodes have the same area). Patent document CN113036298A describes that the secondary battery has both good rate performance and long cycle life by adjusting OI values of the first negative electrode active material layer and the second negative electrode active material layer. Patent documentation CN111653829A describes that the rate performance and cycling performance of the battery can be improved by adding a film-forming additive to the electrolyte. Patent document CN108847489B describes that battery performance such as rate performance can be improved by making improvement on the negative electrode.

### SUMMARY

Technical problem

Although the foregoing documents have described that battery performance such as rate performance has been improved by using various technical means, the improvement of the foregoing technologies is only in positive electrodes, negative electrodes, and electrolytes, without considering a design in a relationship between electrodes such as negative electrodes and the electrolytes to improve rate performance, cycling performance, and storage performance of the battery. In addition, the foregoing prior art still does not significantly alleviate (or does not alleviate) problems of large polarization inside the battery caused by high current charging and high temperature inside the battery (thus leads to problems such as battery swelling).

Technical solution

The inventors of this application have found through intensive study that rate performance, cycling performance, and storage performance of secondary batteries can be improved by using specific negative electrodes and electrolytes and designing a specific relationship between the negative electrodes and the electrolytes of the secondary batteries.

According to a first aspect of this application, a secondary battery is provided and includes an electrolyte and a negative electrode, where

the electrolyte includes a low-viscosity solvent, an electrolyte salt, and a high-dielectric-constant solvent;
a viscosity of the low-viscosity solvent at 25°C is 0.3 mPa·s-0.6 mPa·s;
a dielectric constant of the high-dielectric-constant solvent is 30 F/m-100 F/m, and a percentage of the high-dielectric-constant solvent in total solvent in the electrolyte by mass is higher than 20%; and
the negative electrode includes a negative electrode current collector and a negative electrode active material layer disposed on at least one surface of the negative electrode current collector; and
the secondary battery satisfies the following relational expression:

$$1 \times 10^{-4} \leq \frac{B \times C \times P}{OI \times CW} \leq 1 \times 10^{-3}$$

where B is a percentage of the low-viscosity solvent in total solvent in the electrolyte by mass; C is a percentage of the electrolyte salt in the electrolyte by mass; P is a porosity of the negative electrode active material layer; CW is a coating weight of the negative electrode active material layer, measured in $mg/cm^2$; and OI is an orientation index of the negative electrode active material layer; and

OI=C004/C 110, C004 is a peak area of a 004 characteristic diffraction peak in an X-ray diffraction pattern of the negative electrode active material layer, and C110 is a peak area of a 110 characteristic diffraction peak in the X-ray diffraction pattern of the negative electrode active material layer.

In this aspect, rate performance, cycling performance, and storage performance of the secondary battery can be improved by using a specific negative electrode and electrolyte and designing a specific relationship between the negative electrode and the electrolyte of the battery.

According to any aspect of this application, the low-viscosity solvent may include at least one solvent selected from dimethyl carbonate (DMC), ethyl acetate (EA), methyl acetate (MA), and acetonitrile (ACN). This can improve the rate performance of the secondary battery.

According to any aspect of this application, the percentage B of the low-viscosity solvent in total solvent in the electrolyte by mass may be 10%-80%, and optionally, 20%-70%. This can improve the rate performance of the secondary battery.

According to any aspect of this application, the electrolyte salt may include at least one salt selected from $LiPF_6$, $LiBF_4$, $LiN(SO_2F)_2$ (LiFSI), $LiN(CF_3SO_2)_2$ (LiTFSI), $LiClO_4$, $LiAsF_6$, $LiB(C_2O_4)_2$ (LiBOB), and $LiBF_2C_2O_4$ (LiDFOB); or the electrolyte salt may include at least one salt selected from $NaPF_6$, $NaClO_4$, $NaBCl_4$, $NaSO_3CF_3$, and $Na(CH_3)C_6H_4SO_3$. This can improve performance such as rate performance of the secondary battery.

According to any aspect of this application, the percentage C of the electrolyte salt in the electrolyte by mass may be 10%-23%, and optionally, 13%-20%. This can improve performance such as rate performance of the secondary battery.

According to any aspect of this application, the high-dielectric-constant solvent may include cyclic carbonate, optionally, the cyclic carbonate includes at least one cyclic carbonate selected from ethylene carbonate, propylene carbonate, 1,2-butylene carbonate, 2,3-butylene carbonate, 1,2-pentylene carbonate, 2,3-pentylene carbonate, and fluoroethylene carbonate. This can improve performance such as rate performance of the secondary battery.

According to any aspect of this application, the percentage of the high-dielectric-constant solvent in total solvent in the electrolyte by mass may be 20%-40%. When the percentage of the high-dielectric-constant solvent in total solvent in the electrolyte by mass falls within the foregoing range, it helps improve rate performance, cycling performance, and storage performance of the secondary battery.

According to any aspect of this application, the electrolyte may further include at least one electrolyte selected from diethyl carbonate, methyl ethyl carbonate, methyl propyl carbonate, ethyl propyl carbonate, methyl butyl carbonate, methyl propionate, and ethyl propionate. This can help improve rate performance, cycling performance, and storage performance of the secondary battery.

According to any aspect of this application, the electrolyte may further include a film-forming additive, and the film-forming additive includes at least one additive selected from vinylene carbonate, fluoroethylene carbonate, lithium difluorobisoxalate phosphate, 1,3-propane sultone, lithium difluorophosphate, lithium bisfluorooxalate borate, nitrile compound, and cyclic sulfate, and optionally, the cyclic sulfate is ethylene sulfate. This can help improve performance of the secondary battery, such as rate performance, cycling performance, storage performance, and flame-retardant performance.

According to any aspect of this application, a conductivity of the electrolyte at 25°C may be 8 mS/cm-16 mS/cm. This can help improve rate performance, cycling performance, and storage performance of the secondary battery.

According to any aspect of this application, a viscosity of the electrolyte at 25°C may be 1 mPa·s-7 mPa·s. This can help improve rate performance, cycling performance, and storage performance of the secondary battery.

According to any aspect of this application, an OI value of the negative electrode active material layer may be 3-24, and optionally, 8-24. This can help improve rate performance, cycling performance, and storage performance of the secondary battery.

According to any aspect of this application, a coating weight CW of the negative electrode active material layer may be 6.5 mg/cm$^2$-19.5 mg/cm$^2$, and optionally, 6.5 mg/cm$^2$-13 mg/cm$^2$. This can help improve rate performance, cycling performance, and storage performance of the secondary battery.

According to any aspect of this application, a porosity P of the negative electrode active material layer may be 20%-60%. This can help improve rate performance, cycling performance, and storage performance of the secondary battery.

According to any aspect of this application, the negative electrode active material may include at least one material selected from artificial graphite, natural graphite, soft carbon, hard carbon and a silicon-based material, and optionally, the silicon-based material may include at least one material selected from elemental silicon, silicon oxide, silicon-carbon composite, and silicon-based alloy (when the secondary battery is a lithium-ion battery); or the negative electrode active material may include at least one material selected from natural graphite, modified graphite, artificial graphite, graphene, carbon nanotubes, carbon nanofibers, porous carbon, tin, antimony, germanium, lead, ferric oxide, vanadium pentoxide, tin dioxide, titanium dioxide, trioxide molybdenum, elemental phosphorus, sodium titanate, and sodium terephthalate (when the secondary battery is a sodium-ion battery). This can help improve rate performance, cycling performance, and storage performance of the secondary battery.

According to any aspect of this application, a percentage of the silicon-based material in the total negative electrode active material by mass is 0%-30%, and optionally, 0%-10%. This can help improve rate performance, cycling performance, and storage performance of the secondary battery.

According to any aspect of this application, the secondary battery may further include a positive electrode, and the positive electrode includes a positive electrode active material with a molecular formula of $LiNi_xCo_yMn_zM_{1-x-y-z}O_2$, where $0 \leq x \leq 1$, $0 \leq y \leq 0.5$, $0 \leq z \leq 0.5$, and $x+y+z=1$, optionally, $0.5 \leq x \leq 0.9$, $0 \leq y \leq 0.3$, and $0 \leq z \leq 0.3$, and M is at least one selected from Zr, Al, Mg, Sb, Fe, Cu, and W (when the secondary battery is a lithium-ion battery), or the positive electrode includes at least one positive electrode active material selected from layered transition metal oxide, polyanionic compound, Prussian blue compound, sulfide, nitride, carbide, and titanate (when secondary when the battery is a sodium-ion battery). This can help improve rate performance, cycling performance, and storage performance of the secondary battery.

According to a second aspect of this application, a battery module is provided and includes the foregoing secondary battery. The battery module has excellent rate performance, cycling performance, and storage performance.

According to a third aspect of this application, a battery pack is provided and includes the foregoing battery module. The battery pack has excellent rate performance, cycling performance, and storage performance.

According to a fourth aspect of this application, an electric apparatus is provided and includes at least one of the foregoing secondary battery, battery module, or battery pack. The electric apparatus has excellent rate performance, cycling performance, and storage performance.

Beneficial effects

This application provides a secondary battery, and the secondary battery has excellent rate performance, cycling performance, and storage performance by using a specific negative electrode and electrolyte and designing a specific relationship between the negative electrode and the electrolyte. This application further provides a battery module, a battery pack, and an electric apparatus containing the foregoing secondary battery. The battery module, battery pack, and electric apparatus all have excellent rate performance, cycling performance, and storage performance.

## BRIEF DESCRIPTION OF DRAWINGS

FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source in an embodiment of this application.

Reference signs are described as follows:
1. battery pack; 2. upper box body; 3. lower box body; 4. battery module; 5. secondary battery; 51. housing; 52. electrode assembly; and 53. top cover assembly.

## DESCRIPTION OF EMBODIMENTS

The following describes the secondary battery in this application in detail. However, unnecessary detailed descriptions may be omitted. For example, detailed descriptions of a well-known matter or repeated descriptions of an actual identical structure have been omitted. This is to avoid unnecessarily cumbersome descriptions and to facilitate understanding by persons skilled in the art. In addition, the following descriptions and embodiments are provided for persons skilled in the art to fully understand this application and are not intended to limit the subject matter described in the claims.

Unless otherwise specified, all the embodiments and optional embodiments of this application can be mutually combined to form a new technical solution.

Unless otherwise specified, all the technical features and optional technical features of this application can be mutually combined to form a new technical solution.

For simplicity, only some numerical ranges are explicitly disclosed in this application. However, any lower limit may be combined with any upper limit to form a range not expressly recorded, any lower limit may be combined with any other lower limit to form a range not expressly recorded, and any upper limit may be combined with any other upper limit to form a range not expressly stated. In addition, although not expressly stated, each point or individual value between endpoints of a range is included in the range. Therefore, each point or individual value may be used as its own lower limit or upper limit to be combined with any other point or individual value or combined with any other lower limit or upper limit to form a range not expressly stated.

In the descriptions of this application, it should be noted that "more than" or "less than" is inclusive of the present number and that "more" in "one or more" means two or more than two, unless otherwise specified.

A first embodiment of this application may provide a secondary battery, where the secondary battery includes an electrolyte and a negative electrode,

the electrolyte includes a low-viscosity solvent, an electrolyte salt, and a high-dielectric-constant solvent;
a viscosity of the low-viscosity solvent at 25°C is 0.3 mPa·s-0.6 mPa·s;
a dielectric constant of the high-dielectric-constant solvent is 30 F/m-100 F/m, and a percentage of the high-dielectric-constant solvent in total solvent in the electrolyte by mass is higher than 20%; and
the negative electrode includes a negative electrode current collector and a negative electrode active material layer disposed on at least one surface of the negative electrode current collector; and
the secondary battery satisfies the following relational expression:

$$1 \times 10^{-4} \leq \frac{B \times C \times P}{OI \times CW} \leq 1 \times 10^{-3}$$

where B is a percentage of the low-viscosity solvent in total solvent in the electrolyte by mass; C is a percentage of the electrolyte salt in the electrolyte by mass; P is a porosity of the negative electrode active material layer; CW is a coating weight of the negative electrode active material layer, measured in mg/cm$^2$; and OI is an orientation index of the negative electrode active material layer; and
OI=C004/C110, C004 is a peak area of a 004 characteristic diffraction peak in an X-ray diffraction pattern of the negative electrode active material layer, and C110 is a peak area of a 110 characteristic diffraction peak in the X-ray diffraction pattern of the negative electrode active material layer.

The secondary battery is a complex electrochemical system, and many of its elements (for example, types of positive and negative electrode active materials, a composition of the electrolyte, and an internal structure of the battery) all have great impact on its performance such as rate performance, cycling performance, and storage performance. The inventors of this application have found through intensive study that among the constituent elements of the secondary battery, a design of the electrolyte and the negative electrode has great impact on the rate performance, cycling performance, and storage performance of the secondary battery. Specifically, a percentage of a high-kinetic solvent (for example, the low-viscosity solvent), the percentage of the high-dielectric-constant solvent (for example, cyclic carbonate), a concentration of the electrolyte salt, the porosity of the negative electrode active material layer, the coating weight of the negative electrode active material layer, and the orientation index of the negative electrode active material in the secondary battery have great impact on the rate performance, cycling performance and storage performance.

Based on this, the inventors of this application improve rate performance, cycling performance, and storage performance of the secondary battery by using a specific negative electrode and electrolyte and designing a specific relationship between the negative electrode and the electrolyte of the secondary battery.

In this embodiment, the viscosity of the low-viscosity solvent at 25°C is 0.3 mPa·s-0.6 mPa·s. The use of such solvent with a lower viscosity can better improve conductivity of the electrolyte, thereby enabling the secondary battery to have higher rate performance. In addition, the use of the high-dielectric-constant solvent in the electrolyte can ensure a degree of solvation of the electrolyte salt to increase the conductivity of the electrolyte, thereby helping improve the rate performance of the secondary battery. Based on this, the percentage of the high-kinetic solvent (for example, the low-viscosity solvent), the percentage of the high-dielectric-constant solvent (for example, cyclic carbonate), the concentration of the electrolyte salt, the porosity of the negative electrode active material layer, the coating weight of the negative electrode active material layer, and the orientation index of the negative electrode active material in the secondary battery are adjusted, so that the foregoing parameters satisfy the foregoing relational expression, and the rate performance, cycling performance, and storage performance of the secondary battery can be improved. In this case, the secondary battery has small polarization, low internal resistance, and basically unchanged battery temperature at high rates (for example, during fast charging).

From the perspective of improving the rate performance of the secondary battery, the foregoing low-viscosity solvent is preferably used in the secondary battery of this embodiment. In this application, the type of the low-viscosity solvent is not particularly limited provided that the low-viscosity solvent does not easily cause side reactions in the secondary battery and can improve the rate performance of the secondary battery. For example, the low-viscosity solvent may include at least one low-viscosity solvent selected from dimethyl carbonate (DMC), ethyl acetate (EA), methyl acetate (MA), and acetonitrile (ACN).

From the perspective of improving the rate performance of the secondary battery, the percentage B of the low-viscosity solvent in total solvent in the electrolyte by mass in the secondary battery of this embodiment may be 10%-80%, and optionally, 20%-70%. Optionally, the percentage B of the low-viscosity solvent in total solvent in the electrolyte by mass may be 10%-70%, 10%-60%, 10%-50%, and 20%-50%, 30%-70%, 30%-60%, or 30%-40%. Optionally, the percentage B of the low-viscosity solvent in total solvent in the electrolyte by mass may be 15%, 25%, 35%, 45%, 55%, 65%, or 75%. As described above, the low-viscosity solvent can improve the rate performance of the secondary battery. However, when the percentage of the low-viscosity solvent is excessively high, the percentage of the high-dielectric-constant solvent in the electrolyte may be excessively low, which affects dissociation of the electrolyte salt and deteriorates ionic conductivity of the electrolyte, thereby deteriorating the rate performance of the secondary battery. In addition, when the percentage of the low-viscosity solvent is excessively low, the effect of improving rate performance of the secondary battery may be non-significant.

Types of the electrolyte salt in this application are not particularly limited, and electrolyte salts commonly used in the art can be used. From the perspective of improving performance such as the rate performance of the secondary battery, the electrolyte salt in this embodiment may include at least one electrolyte selected from $LiPF_6$, $LiBF_4$, $LiN(SO_2F)_2$ (LiFSI), $LiN(CF_3SO_2)_2$ (LiTFSI), $LiClO_4$, $LiAsF_6$, $LiB(C_2O_4)_2$ (LiBOB), and $LiBF_2C_2O_4$ (LiDFOB); or the electrolyte salt may include at least one electrolyte salt selected from $NaPF_6$, $NaClO_4$, $NaBCl_4$, $NaSO_3CF_3$, and $Na(CH_3)C_6H_4SO_3$. LiFSI and $LiPF_6$ are preferably used as lithium salts.

From the perspective of improving performance such as the rate performance of the secondary battery, the percentage C of the electrolyte salt in the electrolyte by mass in this embodiment is 10%-23%, and optionally, 13%-20%. Optionally, the percentage B of the low-viscosity solvent in total solvent in the electrolyte by mass may be 10%-22%, 10%-20%, 10%-18%, 10%-16%, 10%-14%, 10%-15%, 11%-20%, 12%-18%, 12%-17%, 12%-15%, 13%-20%, 13%-18%, or 13%-15%.

The electrolyte salt can provide active ions such as lithium ions, and the electrolyte with a higher concentration of active ions can improve concentration polarization during fast charging. However, if the electrolyte salt has an excessive high concentration, the electrolyte has a relative high viscosity, thereby deteriorating rate performance. When the concentration of the electrolyte salt in the electrolyte falls within the foregoing range, it helps improve rate performance of the secondary battery.

From the perspective of improving performance such as the rate performance of the secondary battery, the high-dielectric-constant solvent in this embodiment may include cyclic carbonate, and the cyclic carbonate may include at least one cyclic carbonate selected from ethylene carbonate, propylene carbonate, 1,2-butylene carbonate, 2,3-butylene carbonate, 1,2-pentylene carbonate, 2,3-pentylene carbonate, and fluoroethylene carbonate.

The high-dielectric-constant solvent has good solvation ability. Therefore, the electrolyte containing a specific amount of the high-dielectric-constant solvent can better dissociate the electrolyte salt, achieve higher ionic conductivity of the electrolyte, and improve rate performance of the secondary battery.

From the perspective of improving performance such as the rate performance of the secondary battery, the percentage of the high-dielectric-constant solvent in total solvent in the electrolyte by mass in this embodiment may be 20%-40%. Optionally, the percentage of the high-dielectric-constant solvent in total solvent in the electrolyte by mass may be 20%-35%, 20%-30%, 20%-25%, 25%-40%, 25%-36%, 25%-32%, 25%-28%, 30%-40%, or 30%-35%. Optionally, the percentage of the high-dielectric-constant solvent in total solvent in the electrolyte by mass may be 21%, 22%, 23%, 24%, 27%, 28%, 29%, 33%, 34%, 37%, 38%, or 39%. When the percentage of the high-dielectric-constant solvent in total solvent in the electrolyte by mass is excessively low, the electrolyte salt in the electrolyte may not be sufficiently dissociated, thereby deteriorating the ionic conductivity of the electrolyte. In addition, when the percentage of the high-dielectric-constant solvent in total solvent in the electrolyte by mass is excessively high, the viscosity of the electrolyte may become larger. As a result, infiltration of the electrolyte to positive and negative electrodes may be deteriorated, thereby deteriorating the performance of the secondary battery. When the percentage of the high-dielectric-constant solvent in total solvent in the electrolyte by mass falls within the foregoing range, it helps improve rate performance, cycling performance, and storage performance of the secondary battery.

From the perspective of improving performance such as the rate performance, cycling performance, and storage performance of the secondary battery, the electrolyte in this embodiment may further include at least one electrolyte selected from diethyl carbonate, methyl ethyl carbonate, methyl propyl carbonate, ethyl propyl carbonate, methyl butyl carbonate, methyl propionate, and ethyl propionate.

From the perspective of improving performance such as the rate performance, cycling performance, and storage performance of the secondary battery, the electrolyte in this embodiment may further include a film-forming additive. The film-forming additive may include at least one additive selected from vinylene carbonate, fluoroethylene carbonate, lithium difluorobisoxalate phosphate, 1,3-propane sultone, lithium difluorophosphate, lithium bisfluorooxalate borate, nitrile compound, and cyclic sulfate, and optionally, the cyclic sulfate is ethylene sulfate. The film-forming additive may form a low-impedance protective film on a surface of the positive electrode and/or the negative electrode of the secondary battery to reduce side reactions in the battery, thereby improving the rate performance, cycling performance, and storage performance of the secondary battery.

From the perspective of improving performance such as the rate performance, cycling performance, and storage performance of the secondary battery, the conductivity of the electrolyte at 25°C in this embodiment may be 8 mS/cm-16 mS/cm. The conductivity may be 8 mS/cm-16 mS/cm, 8 mS/cm-14 mS/cm, 8 mS/cm-12 mS/cm, 8 mS/cm-10 mS/cm, 9 mS/cm-15 mS/cm, 9 mS/cm-13 mS/cm, 9 mS/cm-11 mS/cm, 10 mS/cm-15 mS/cm, or 11 mS/cm-16 mS/cm.

From the perspective of improving performance such as the rate performance, cycling performance, and storage performance of the secondary battery, the viscosity of the electrolyte at 25°C in this embodiment may be 1 mPa s-7 mPa s. The viscosity may be 1 mPa·s-7 mPa·s, 1 mPa·s-6 mPa·s, 1 mPa·s-5 mPa·s, 1 mPa·s-4 mPa·s, 2 mPa·s-7 mPa·s, 2 mPa·s-5 mPa·s, 2 mPa·s-4 mPa·s, 3 mPa·s-7 mPa·s, 2 mPa·s-6 mPa·s, or 2 mPa·s-6.5 mPa·s.

From the perspective of improving performance such as the rate performance, cycling performance, and storage performance of the secondary battery, the OI value of the negative electrode active material layer in this embodiment may be 3-24, and optionally, 8-24. Optionally, the OI value of the negative electrode active material layer may be 3-20, 3-18, 3-15, 3-14, 3-10, 3-8, 3-6, 5-22, 5-20, 5-18, 5-10, 5-8, 6-22, 6-18, 6-15, 6-10, 6-8, 7-18, 7-12, 7-10, 7-9, 8-18, 8-14, or 8-10.

A smaller OI value helps lithium ions to be fast intercalated into the negative electrode. When the OI value of the negative electrode active material layer falls within the foregoing range, it helps enable the secondary battery to have excellent rate performance, cycling performance, and storage performance.

Persons skilled in the art will understand that the OI value of the negative electrode active material layer is used to indicate an orientation index of the negative electrode active material layer, that is, a degree of anisotropy of a crystal grain arrangement in negative electrode active material layer. In this application, the OI value is defined as an area ratio of the 004 characteristic diffraction peak to the 110 characteristic diffraction peak in the X-ray diffraction pattern of the negative electrode active material layer. To be specific, OI=C004/C110, C004 is a peak area of the 004 characteristic diffraction peak in the X-ray diffraction pattern of the negative electrode active material layer, and C110 is a peak area of the 110 characteristic diffraction peak in the X-ray diffraction pattern of the negative electrode active material layer.

The OI value of the negative electrode active material layer may be measured by using a well-known method in the art, for example, by using the method described in the embodiments in this application.

During preparation of the negative electrode, the OI value of the negative electrode active material layer may be controlled by adjusting the following parameters.

A median particle size by volume Dv50 of the negative electrode active material and a goal OI value $G_{OI}$ of the active material powder both have specific impact on the OI value of the negative electrode active material layer. Generally, a larger Dv50 of the negative electrode active material corresponds to a greater OI value of the negative electrode active material layer, and a larger goal OI value of the negative electrode active material powder corresponds to a greater OI value of the negative electrode active material layer.

During preparation of the battery, a magnetic field induction technology may be introduced in a coating or drying process to artificially induce arrangement of the negative electrode active material in the negative electrode, thereby changing the OI value of the negative electrode active material layer, or may be introduced in a cold pressing process to change arrangement of the negative electrode active material by adjusting compaction density of the negative electrode active material layer, thereby controlling the OI value of the negative electrode active material layer.

From the perspective of improving performance such as the rate performance, cycling performance, and storage performance of the secondary battery, the coating weight CW of the negative electrode active material layer in this embodiment may be 6.5 mg/cm$^2$-19.5 mg/cm$^2$, and optionally, 6.5 mg/cm$^2$-13 mg/cm$^2$. Optionally, the coating weight CW of the negative electrode active material layer may be 6.5 mg/cm$^2$-18 mg/cm$^2$, 6.5 mg/cm$^2$-16 mg/cm$^2$, 6.5 mg/cm$^2$-14 mg/cm$^2$, 6.5 mg/cm$^2$-12 mg/cm$^2$, 6.5 mg/cm$^2$-10 mg/cm$^2$, 7 mg/cm$^2$-18 mg/cm$^2$, 7 mg/cm$^2$-16 mg/cm$^2$, 7 mg/cm$^2$-14 mg/cm$^2$, 7 mg/cm$^2$-12 mg/cm$^2$, 7 mg/cm$^2$-10 mg/cm$^2$, 8 mg/cm$^2$-18 mg/cm$^2$, 8 mg/cm$^2$-16 mg/cm$^2$, 8 mg/cm$^2$-14 mg/cm$^2$, 8 mg/cm$^2$-12 mg/cm$^2$, 8 mg/cm$^2$-10 mg/cm$^2$, 8.5 mg/cm$^2$-18 mg/cm$^2$, 8.5 mg/cm$^2$-16 mg/cm$^2$, 8.5 mg/cm$^2$-14 mg/cm$^2$, 8.5 mg/cm$^2$-12 mg/cm$^2$, or 8.5 mg/cm$^2$-10 mg/cm$^2$. Further and optionally, the coating weight CW of the negative electrode active material layer may be 9 mg/cm$^2$, 11 mg/cm$^2$, 13 mg/cm$^2$, 15 mg/cm$^2$, 17 mg/cm$^2$, or 19 mg/cm$^2$.

The coating weight of the negative electrode active material layer is a mass of the negative electrode active material layer coated per unit area. A negative electrode with a smaller coating weight has a smaller diffusion resistance, which enables lithium ions to better diffuse in the negative electrode active material layer, thereby improving the rate performance of the secondary battery. However, the percentage of the negative electrode active material will directly affect energy density of the secondary battery, and therefore the coating weight of the negative electrode active material layer should not be excessively small. When the coating weight CW of the negative electrode active material layer falls within the foregoing range, it helps improve rate performance, cycling performance, and storage performance of the secondary battery.

From the perspective of improving performance such as the rate performance, cycling performance, and storage performance of the secondary battery, the porosity P of the negative electrode active material layer in this embodiment may be 20%-60%. Optionally, the porosity P of the negative electrode active material layer may be 20%-55%, 20%-50%, 20%-45%, 20%-40%, 20%-35%, 25%-55%, 25%-50%, 25%-45%, 25%-40%, 25%-35%, 30%-55%, 30%-45%, 30%-43%, 30%-41%, 30%-38%, 34%-55%, 34%-45%, 36%-43%, 36%-41%, or 36%-48%.

The porosity P of the negative electrode active material layer may be tested as follows: an inert gas with a small molecular diameter such as helium or nitrogen is used, an actual volume of a to-be-tested sample is accurately measured by using a displacement method to obtain a porosity of the to-be-tested sample by using the Bohr's law (PV=nRT). Porosity P=(V11-V12)/V11×100%, where V11 represents an apparent volume of the negative electrode active material layer, and V12 represents the actual volume of the negative electrode active material layer.

The magnitude of the porosity of the negative electrode active material layer affects the diffusion of lithium ions in the negative electrode active material layer, thereby affecting the rate performance of the secondary battery. Generally, a larger porosity of the negative electrode active material layer corresponds to better infiltration of the electrolyte and better rate performance of the secondary battery. However, if the porosity is excessively large, internal short circuit or self-discharge rate may occur. In addition, an excessively-large porosity of the negative electrode active material layer may not help maintain mechanical strength of the negative electrode active material layer. When the porosity of the negative electrode active material layer falls within the foregoing range, it helps improve the rate performance, cycling performance, and storage performance of the secondary battery, while maintaining the mechanical strength of the negative electrode active material layer and preventing the occurrence of internal short circuits or self-discharge.

From the perspective of improving performance such as the rate performance, cycling performance, and storage performance of the secondary battery, the negative electrode active material in this embodiment may include at least one material selected from artificial graphite, natural graphite, soft carbon, hard carbon and a silicon-based material, or the negative electrode active material may include at least one material selected from natural graphite, modified graphite, artificial graphite, graphene, carbon nanotubes, carbon nanofibers, porous carbon, tin, antimony, germanium, lead, ferric oxide, vanadium pentoxide, tin dioxide, titanium dioxide, trioxide molybdenum, elemental phosphorus, sodium titanate, and sodium terephthalate. Optionally, the silicon-based material may include at least one material selected from elemental silicon, silicon oxide, silicon-carbon composite, and silicon-based alloy.

From the perspective of improving performance such as the rate performance, cycling performance, and storage performance of the secondary battery, a percentage of the silicon-based material in the total negative electrode active material by mass in this embodiment may be 0%-30%, and optionally, 0%-10%. Optionally, the percentage of the silicon-based material in the total negative electrode active material by mass may be 0%-25%, 0%-20%, 0%-15%, 0%-5%, 4%-20%, 4%-16%, 4%-12%, 6%-13%, 6%-26%, 6%-18%, 7%-13%, 7%-22%, or 7%-19%.

From the perspective of improving performance such as the rate performance, cycling performance, and storage performance of the secondary battery, the positive electrode in this embodiment further includes a positive electrode, and the positive electrode may include a positive electrode active material with a molecular formula of $LiNi_xCo_yMn_zM_{1-x-y-z}O_2$, where $0 \leq x \leq 1$, $0 \leq y \leq 0.5$, $0 \leq z \leq 0.5$, and $x+y+z=1$, optionally, $0.5 \leq x \leq 0.9$, $0 \leq y \leq 0.3$, and $0 \leq z \leq 0.3$, and M is at least one selected from Zr, Al, Mg, Sb, Fe, Cu, and W. Optionally, the positive electrode active material may be selected from at least one of $LiNi_{1/3}Co_{1/3}Mn_{1/3}O_2$ (NCM$_{333}$ for short), $LiNi_{0.5}Co_{0.2}Mn_{0.3}O_2$ (NCM$_{523}$ for short), $LiNi_{0.5}Co_{0.25}Mn_{0.25}O_2$ (NCM$_{211}$ for short), $LiNi_{0.6}Co_{0.2}Mn_{0.2}O_2$ (NCM$_{622}$ for short), $LiNi_{0.8}Co_{0.1}Mn_{0.1}O$ NCM$_{811}$ for short), and modified compounds thereof. When the secondary battery is a sodium-ion secondary battery, the positive electrode may include at least one positive electrode active material selected from layered transition metal oxide, polyanionic compound, Prussian blue compound, sulfide, nitride, carbide, and titanate.

Detailed description of the embodiments of this application

The following describes a secondary battery, a battery module, a battery pack, and an electric apparatus in this application in detail with appropriate reference to the accompanying drawings.

An embodiment of this application provides a secondary battery. The secondary battery may be a lithium-ion battery or a sodium-ion battery. The specific embodiments of this application will be described in detail below by using a lithium-ion battery as an example.

Typically, the lithium-ion battery may include a positive electrode, a negative electrode, an electrolyte, and a separator. In a charging and discharging process of the battery, lithium ions are intercalated and deintercalated between the positive electrode and the negative electrode. The electrolyte conducts lithium ions between the positive electrode and the negative electrode. The separator is disposed between the positive electrode and the negative electrode to prevent short circuit of the positive electrode and negative electrode and to allow the ions to pass through. In some cases, for example, when a liquid gel polymer electrolyte is used as the electrolyte, the liquid electrolyte can simultaneously function as a separator. In such cases, the liquid electrolyte is also regarded as the electrolyte described in this application. In other words, the electrolyte in this application is not limited to a liquid form. Composing elements of the lithium-ion battery will be described in detail below.

[Positive electrode]

The positive electrode may include a positive electrode current collector and a positive electrode active material layer disposed on at least one surface of the positive electrode current collector. The positive electrode active material layer may include a positive electrode active material, and optionally, a binder and a conductive agent.

In an example, the positive electrode current collector includes two back-to-back surfaces in its thickness direction. The positive electrode active material layer is disposed on either or both of the two back-to-back surfaces of the positive electrode current collector.

In some embodiments, the positive electrode current collector may be a metal foil or a composite current collector. For example, an aluminium foil may be used as the metal foil. The composite current collector may include a polymer material matrix and a metal layer formed on at least one surface of the polymer material matrix. The composite current collector may be formed by forming a metal material (for example, aluminium, aluminium alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a positive electrode active material for lithium-ion batteries well known in the art. In an example, the positive electrode active material may include at least one of the following: olivine-structured lithium-containing phosphate, lithium transition metal oxide, and respective modified compounds thereof. However, this application is not limited to these materials, and other conventional materials that can be used as positive electrode active materials for lithium-ion batteries may also be used. One of these positive electrode active materials may be used alone, or two or more of them may be used in combination. For example, a positive electrode active material with a molecular formula of $LiNi_xCo_yMn_zM_{1-x-y-z}O_2$, may be used, where $0 \leq x \leq 1$, $0 \leq y \leq 0.5$, $0 \leq z \leq 0.5$, and $x+y+z=1$, optionally, $0.5 \leq x \leq 0.9$, $0 \leq y \leq 0.3$, and $0 \leq z \leq 0.3$, and M is at least one selected from Zr, Al, Mg, Sb, Fe, Cu, and W. Optionally, the positive electrode active material may be selected from at least one of $LiNi_{1/3}Co_{1/3}Mn_{1/3}O_2$ ($NCM_{333}$ for short), $LiNi_{0.5}Co_{0.2}Mn_{0.3}O_2$ ($NCM_{523}$ for short), $LiNi_{0.5}Co_{0.25}Mn_{0.25}O_2$ ($NCM_{211}$ for short), $LiNi_{0.6}Co_{0.2}Mn_{0.2}O_2$ ($NCM_{622}$ for short), $LiNi_{0.8}Co_{0.1}Mn_{0.1}O$ $NCM_{811}$ for short), and modified compounds thereof. In addition, examples of the olivine-structured lithium-containing phosphate may include, but are not limited to, at least one of lithium iron phosphate (for example, $LiFePO_4$ (or LFP for short)), composite material of lithium iron phosphate and carbon, lithium manganese phosphate (for example, $LiMnPO_4$), composite material of lithium manganese phosphate and carbon, lithium manganese iron phosphate, and composite material of lithium manganese iron phosphate and carbon.

When the secondary battery is a sodium-ion battery, the positive electrode may include at least one positive electrode active material selected from layered transition metal oxide, polyanionic compound, Prussian blue compound, sulfide, nitride, carbide, and titanate. Optionally, the positive electrode active material includes but is not limited to at least one material selected from $NaCrO_2$, $Na_2Fe_2(SO_4)_3$, molybdenum disulfide, tungsten disulfide, vanadium disulfide, titanium disulfide, hexagonal boron nitride, carbon-doped hexagonal boron nitride, titanium carbide, tantalum carbide, molybdenum carbide, silicon carbide, $Na_2Ti_3O_7$, $Na_2Ti_6O_{13}$, $Na_4Ti_5O_{12}$, $Li_4Ti_5O_{12}$, and $NaTi_2(PO_4)_3$.

In some embodiments, the positive electrode active material layer may optionally include a binder. For example, the binder may include at least one binder selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode active material layer may optionally include a conductive agent. For example, a conductive agent commonly used in the art may be used. The conductive agent may include at least one of superconducting carbon, acetylene black, carbon black, Ketjen black, carbon nanotubes, carbon nanorods, graphene, and carbon nanofibers.

In some embodiments, the positive electrode may be prepared by using the following method: the foregoing components used for preparing a positive electrode, for example, the positive electrode active material, conductive agent, binder, and any other components, are dispersed in a solvent (for example, N-methylpyrrolidone) to form a positive electrode slurry; the positive electrode slurry is applied on the positive electrode current collector, and then processes such as drying and cold pressing are performed to obtain the positive electrode. Alternatively, in another embodiment, the positive electrode may be manufactured by using the following method: the positive electrode slurry for forming a positive electrode active material layer is applied on a separate carrier, and the film obtained through peeling from the carrier is laminated on the positive electrode current collector.

[Negative electrode]

The negative electrode includes a negative electrode current collector and a negative electrode active material layer disposed on at least one surface of the negative electrode current collector. The negative electrode active material layer may include a negative electrode active material, and optionally, a binder, a conductive agent, and other additives.

For example, the negative electrode current collector includes two back-to-back surfaces in its thickness direction, and the negative electrode active material layer is disposed on either or both of the two back-to-back surfaces of the negative electrode current collector.

In some embodiments, the negative electrode current collector may be a metal foil or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In this embodiment in which the secondary battery is a lithium-ion battery, the negative electrode active material may be a negative electrode active material for a lithium-ion battery well known in the art. In an example, the negative electrode active material may include at least one material selected from artificial graphite, natural graphite, soft carbon, hard carbon, and a silicon-based material. The silicon-based material includes at least one material selected from elemental silicon, silicon oxide, silicon-carbon composite, and silicon-based alloy. When the negative electrode active material includes the silicon-based material, a percentage of the silicon-based material in the total negative electrode active material by mass is 0%-30%, and optionally, 0%-10%. However, this application is not limited to these materials, and other conventional materials that can be used as positive electrode active materials for batteries may also be used. One of these negative electrode active materials may be used alone, or two or more of them may be used in combination.

In the embodiment in which the secondary battery is a sodium-ion battery, the negative electrode active material may include at least one material selected from natural graphite, modified graphite, artificial graphite, graphene, carbon nanotubes, carbon nanofibers, porous carbon, tin, antimony, germanium, lead, ferric oxide, vanadium pentoxide, tin dioxide, titanium dioxide, trioxide molybdenum, elemental phosphorus, sodium titanate, and sodium terephthalate Optionally, the negative electrode active material is at least one material selected from natural graphite, modified graphite, artificial graphite, and graphene.

In some embodiments, the negative electrode active material layer may optionally include a binder. The binder may be selected from at least one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer may optionally include a conductive agent. The conductive agent may be selected from at least one of superconducting carbon, acetylene black, carbon black, Ketjen black, carbon nanotubes, carbon nanorods, graphene, and carbon nanofibers.

In some embodiments, the negative electrode active material layer may alternatively optionally include other additives such as a thickener (for example, sodium carboxymethyl cellulose (CMC-Na)).

In some embodiments, the negative electrode may be prepared by using the following method: the foregoing components used for preparing a negative electrode, for example, the positive electrode active material, conductive agent, binder, and any other components, are dispersed in a solvent (for example, deionized water) to form a negative electrode slurry; the negative electrode slurry is applied on the negative electrode current collector, and then processes such as drying and cold pressing are performed to obtain the negative electrode. Alternatively, in another embodiment, the negative electrode may be manufactured by using the following method: the negative electrode slurry for forming a negative electrode active material layer is applied on a separate carrier, and the film obtained through peeling from the carrier is laminated on the negative electrode current collector.

[Electrolyte]

The electrolyte conducts ions between the positive electrode and the negative electrode. This application does not specifically impose limitation on the type of electrolyte, which may be selected as needed. For example, the electrolyte may be in a liquid or gel state.

In addition, the electrolytic in the embodiments of this application may contain an additive. The additive may include an additive commonly used in the art. The additive may include, for example, halogenated alkylene carbonates (such as difluoroethylene carbonate), pyridine, triethyl phosphite, triethanolamine, cyclic ethers, ethylenediamine, (condensed) glymes, hexamethylphosphoric triamide, nitrobenzene derivatives, sulfur, quinoneimine dyes, N-substituted oxazolidinones, N,N-substituted imidazolidines, ethylene glycol dialkyl ethers, ammonium salts, pyrrole, 2-methoxyethanol, or aluminium trichloride. In this case, a percentage of the added additive may be 0.1wt%-5wt% based on a total weight of the electrolyte, or a percentage of the additive may be adjusted by those skilled in the art according to actual needs.

The electrolyte may include an electrolytic salt and a solvent.

In the embodiment in which the secondary battery is a lithium-ion battery, the electrolyte salt may include at least one electrolyte salt selected from $LiPF_6$, $LiBF_4$, $LiN(SO_2F)_2$ (LiFSI), $LiN(CF_3SO_2)_2$ (LiTFSI), $LiClO_4$, $LiAsF_6$, $LiB(C_2O_4)_2$ (LiBOB), and $LiBF_2C_2O_4$ (LiDFOB).

In the embodiment in which the secondary battery is a sodium-ion battery, the electrolyte salt may include at least one electrolyte salt selected from NaPF6, $NaClO_4$, $NaBCl_4$, $NaSO_3CF_3$, and $Na(CH_3)C_6H_4SO_3$.

In some embodiments, in addition to the foregoing solvents such as the low-viscosity solvent and the high-dielectric-constant solvent, the electrolyte may also include other solvents commonly used in the art as required, for example, at least one solvent selected from 1,4-butyrolactone, sulfolane, dimethyl sulfone, methyl ethyl sulfone, and diethyl sulfone.

[Separator]

In some embodiments, the secondary battery further includes a separator. The separator is not limited to any specific type in this application, and may be any commonly known porous separator with good chemical stability and mechanical stability. In addition, the separator preferably has excellent ion permeability and electrolyte moisture retention capability.

In some embodiments, a material of the separator may be selected from at least one of glass fiber, non-woven fabric, polyethylene, polypropylene, and polyvinylidene fluoride. The separator is not limited in form, and may be a single-layer thin film or a multilayer composite thin film. When the separator is a multi-layer composite thin film, all layers may be made of same or different materials, which is not particularly limited.

In some embodiments, the positive electrode, the negative electrode, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminium shell, or a steel shell. The outer package of the secondary battery may alternatively be a soft pack, for example, a soft pouch. The material of the soft pack may be plastic. As the plastic, polypropylene, polybutylene terephthalate, and polybutylene succinate may be listed.

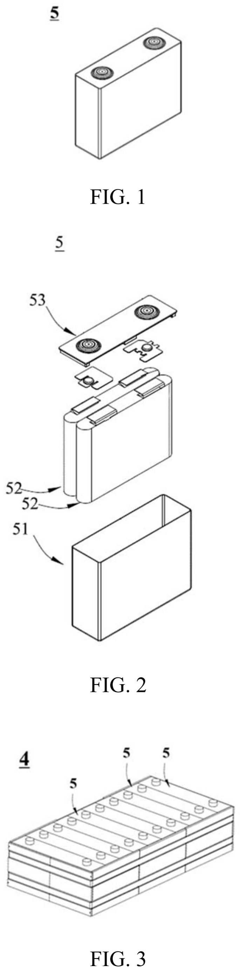

This application does not impose special limitations on a shape of the secondary battery, and the secondary battery may be cylindrical, rectangular, or of any other shapes. For example, FIG. 1 shows a secondary battery 5 of a prismatic structure as an example.

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode, the negative electrode, and the separator may form an electrode assembly 52 through winding or laminating. The electrode assembly 52 is packaged in the accommodating cavity. The electrolyte is infiltrated into the electrode assembly 52. There may be one or more electrode assemblies 52 in the secondary battery 5, and persons skilled in the art may make choices according to actual requirements.

In some embodiments, secondary batteries may be assembled into a battery module, and the battery module may include one or more secondary batteries. A specific quantity may be chosen by persons skilled in the art based on use and capacity of the battery module.

FIG. 3 shows a battery module 4 as an example. Referring to FIG. 3, in the battery module 4, a plurality of secondary batteries 5 are sequentially arranged in a length direction of the battery module 4. Certainly, the plurality of secondary batteries 5 may alternatively be arranged in any other manner. Further, the plurality of secondary batteries 5 may be fastened through fasteners.

Optionally, the battery module 4 may further include a housing with an accommodating space, and the plurality of secondary batteries 5 are accommodated in the accommodating space.

In some embodiments, the foregoing battery module may be assembled into a battery pack. The battery pack may include one or more battery modules. A specific quantity may be chosen by persons skilled in the art based on use and capacity of the battery module.

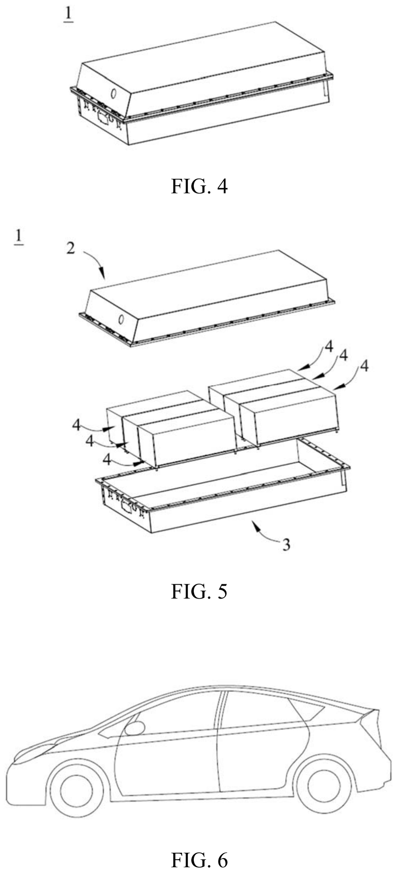

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus, or an energy storage unit of the electric apparatus. The electric apparatus may include, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like.

The secondary battery, the battery module, or the battery pack may be selected for the electric apparatus based on requirements for using the electric apparatus.

FIG. 6 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

## Examples

The following describes examples of this application in detail. The examples described below are exemplary and only used to explain this application, but cannot be understood as a limitation on this application. Examples whose technical solutions or conditions are not specified are made based on technical solutions or conditions described in documents in the art, or made based on the product specification. The reagents or instruments used are all conventional products that can be purchased on the market if no manufacturer is indicated. The examples of this application will be described below by using a lithium-ion battery as an example.

## Example 1

Preparation of lithium-ion battery

1. Preparation of electrolyte

The preparation of the electrolyte was carried out in an argon atmosphere glove box with a water percentage by mass < 10 ppm. Dimethyl carbonate, ethylene carbonate, and diethyl carbonate were first mixed in a ratio of 2:3:5 (mass ratio); 13wt% $LiPF_6$ was added to the mixed solvent. Hereto, the preparation of the electrolyte was completed. An amount of the foregoing lithium salt referred to a percentage calculated based on the total weight of the electrolyte.

2. Preparation of positive electrode

A positive electrode active material $LiNi_5Co_2Mn_3O_2$, a binder polyvinylidene fluoride, and a conductive agent acetylene black were mixed at a weight ratio of 98:1:1 and dispersed in a solvent N-methylpyrrolidone (NMP) to make a positive electrode slurry. The resulting slurry was applied on a current collector aluminium foil, and then processes such as drying, cold pressing, edge trimming, cutting, and slitting were performed to prepare the positive electrode of the lithium-ion battery.

3. Preparation of negative electrode

A negative electrode active material artificial graphite (its OI value is shown in Table 1; similarly hereinafter), a conductive agent carbon black, a thickener CMC, a binder styrene-butadiene rubber (SBR) were mixed at weight ratio of 96:2:1:1, dispersed in a solvent deionized water, and then stirred by using a vacuum mixer to obtain a negative electrode slurry. The negative electrode slurry was applied on a current collector copper foil, and then processes such as drying, cold pressing, trimming, cutting, and slitting were performed to obtain a negative electrode with a coating weight of 8 mg/cm$^2$ and a porosity of 40%. OI values of the negative electrode active material layers in this example were 7 (their OI values are shown in Table 1; similarly hereinafter).

Test for porosity P of negative electrode active material layer

The porosity P of the negative electrode active material layer might be tested as follows: an inert gas with a small molecular diameter such as helium or nitrogen was used, an actual volume of a to-be-tested sample was accurately measured by using a displacement method, to obtain a porosity of the to-be-tested sample by using the Bohr's law (PV=nRT). Porosity P=(V11-V12)/V11×100%, where V11 represented an apparent volume of the negative electrode active material layer and was obtained by calculating length × width × thickness of the electrode active material layer, and V12 represented the actual volume of the negative electrode plate. The specific test method was: a compressed steel cylinder was opened; a pressure relief valve was adjusted to balance the pressure between 0.14 MPa and 0.18 MPa; the negative electrode was punched into a relatively flat and flawless disc with an area of 1.5394 cm$^2$, with the number of samples of more than 20. The sample was placed into a sample cup, and a true density tester (GB/T2790-1995) was controlled for testing, to obtain the real volume V12 of the negative electrode active material layer. V11 was obtained by 1.5394 cm$^2\times$ electrode plate thickness. The porosity of the to-be-tested sample was obtained by using the formula: porosity P=(V11-V12)/V11$\times$100%.

Test for OI value of negative electrode active material layer

The OI value of the negative electrode active material layer was used to represent an orientation index of the negative electrode active material layer. The OI value of the negative electrode active material layer might be calculated from an X-ray diffraction pattern measured by using an X-ray powder diffractometer. To be specific, OI=C004/C110, where C004 was a peak area of a 004 characteristic diffraction peak in an X-ray diffraction pattern of the negative electrode active material layer, and C110 was a peak area of a 110 characteristic diffraction peak in the X-ray diffraction pattern of the negative electrode active material layer. Specific test method: an ambient temperature was controlled to be 15-25°C, and the ambient humidity was controlled to be 20%-80%. An electrode plate with a sample area of not less than 30 mm$\times$30 mm was taken, and the electrode plate was carefully attached to an end of a clean glass slide with double-sided tape, which was placed in a Bruker D8 Discover X-ray powder diffractometer. A scanning angle range was set to 50-80°, the step size was set to 0.01°, and the duration of each step was set to 0.9S. The equipment was started to obtain the X-ray diffraction pattern of the negative electrode active material layer. The software DIFFRAC.EVA V4.2.2 was used to obtain the peak area of the 004 crystal plane diffraction peak and the peak area of the 110 crystal plane diffraction peak of the negative electrode active material layer, so as to obtain the OI value of the negative electrode active material layer by using the formula OI=C004/C110.

4. Separator

A commercially available polypropylene film was used as a separator.

5. Assembly of battery

The foregoing positive electrode, the separator, and the negative electrode were wound or laminated in sequence, so that the separator was placed between the positive and negative electrodes, to obtain a bare battery core. The bare battery core was placed in an outer package. The prepared electrolyte was injected into the dried battery core, and then processes such as standing, chemical formation, and shaping were performed to obtain the lithium-ion secondary battery.

**Example 2**

The lithium-ion battery was prepared in the same manner as in Example 1, except that dimethyl carbonate, ethylene carbonate, and diethyl carbonate were mixed at a ratio of 4:3:3 (mass ratio).

**Example 3**

The lithium-ion battery was prepared in the same manner as in Example 1, except that dimethyl carbonate, ethylene carbonate, and diethyl carbonate were mixed at a ratio of 7:3:0 (mass ratio).

**Examples 4 and 5**

The lithium-ion batteries were prepared in the same manner as in Example 2, except that the percentages of the lithium salts were modified to 10wt% and 23wt%, respectively.

**Examples 6 and 7**

The lithium-ion batteries were prepared in the same manner as in Example 2, except that the orientation index OI values of the negative electrode active material layers were modified to 3 and 24, respectively.

**Examples 8 and 9**

The lithium-ion batteries were prepared in the same manner as in Example 2, except that the coating weights of the prepared negative electrodes were modified to 6.5 mg/cm$^2$ and 13 mg/cm$^2$, respectively.

**Examples 10 and 11**

The lithium-ion batteries were prepared in the same manner as in Example 2, except that the porosities of the prepared negative electrodes were modified to 20% and 60%, respectively.

**Example 12**

The lithium-ion battery was prepared in the same manner as in Example 2, except that dimethyl carbonate was replaced by ethyl acetate.

**Example 13**

The lithium-ion battery was prepared in the same manner as in Example 1, except that ethylene sulfate accounting for 1% of the total mass of the electrolyte was additionally added in the preparation of the electrolyte.

**Example 14**

The lithium-ion battery was prepared in the same manner as in Example 2, except that a percentage of a solvent such as the high-dielectric-constant solvent in the electrolyte was adjusted as shown in Table 2 below.

**Example 15**

The lithium-ion battery was prepared in the same manner as in Example 2, except that soft carbon of 2% of the total mass of the negative electrode active material artificial graphite was applied on the surface of the negative electrode active material artificial graphite. The OI value of the negative electrode active material layer in this example was 4.

**Example 16**

The lithium-ion battery was prepared in the same manner as in Example 2, except that SiO was used with a percentage of 3% in the total mass of the negative electrode active material artificial graphite. The OI value of the negative electrode active material layer in this example was 7.

**Example 17**

The sodium-ion battery was prepared in the same manner as in Example 1, except that the positive electrode active material was replaced by $NaCrO_2$ and the electrolyte salt in the electrolyte was replaced by $NaPF_6$.

**Comparative Examples 1 to 8**

The lithium-ion batteries were prepared in the same manner as in Example 2, except that the percentages of the solvents in the electrolyte, the OI values of the negative electrode active material layers, the concentrations of the lithium salts, the porosities of the negative electrode active material layers, and the coating weights of the negative electrode active material layers were adjusted as shown in Tables 1 and 2 below.

Next, a test procedure for the lithium-ion battery is described below.

1. Test for conductivity of electrolyte

An alternating voltage of 1KHz was applied between two platinum black electrode plates parallel to each other, charged ions in an electrolyte solution migrated under an action of the electric field to transfer electrons, and capability of transferring electrons was converted into electrical signals for outputting. In this way, the conductivity was obtained.

Specifically, the conductivity of the finished electrolyte was tested by using Rex Electric Chemical (DDSJ-318) conductivity meter. The ambient temperature was controlled to 25°C, and the ambient humidity < 80%. 40 mL of electrolyte was used as a sample, and the sample was poured into a dry and clean plastic centrifuge tube, left standing in a constant-temperature bath at 25°C for 30 minutes. The dried electrode was vertically placed into a uniform to-be-tested sample. The instrument was started for testing, the test was repeated for 3 times, and 3 test results were averaged.

2. Test for viscosity of electrolyte

At a specific temperature, a shear force that a rotor received when the rotor rotated continuously at a constant speed in the sample caused a spring to generate torque, and the torque was proportional to the viscosity, so that the viscosity was obtained.

Specifically, the viscosity of the finished electrolyte was tested with a Brookfield (DV-2TLV) viscometer. The ambient temperature was controlled to 25°C and the ambient humidity < 80%. 30 mL of electrolyte was used as a sample, and the sample was placed in a water bath at 25°C for at least 30 minutes. The rotor was placed into a sample cup, and the sample was added to about 0.3 cm away from the cup mouth. The connected viscometer was started, 70 RPM was selected for testing, 10 data points were collected, and an average of these points was found.

3 Rate performance test

Rate performance test (performed at 80%SOC charging): the test temperature was adjusted to 35°C, and the lithium-ion battery was charged at xC (x was 0.5, 0.8, 1, 1.2, 1.5, 2, 2.5, 3) and then discharged at 1C, where the charging rate increased sequentially. An anode potential of 0 V was used as the charging cut-off voltage. The maximum charging rates $x_1C$, $x_2C$, $x_3C$, $x_4C$, $x_5C$, $x_6C$, $x_7C$, and $x_8C$ that could be achieved in ranges of 0-10%SOC, 10-20%SOC, 20-30%SOC, 30-40%SOC, 40-50%SOC, 50-60%SOC, 60-70%SOC, and 70-80%SOC were obtained by using the formula:

$$T\,(min) = (\frac{1}{x_1} + \frac{1}{x_2} + \frac{1}{x_3} + \frac{1}{x_4} + \frac{1}{x_5} + \frac{1}{x_6} + \frac{1}{x_7} + \frac{1}{x_8}) \times 6$$ to calculate the charging time (min) required for 0-80% SOC.

4. Cycle life

At 45°C, the lithium-ion batteries were charged to 4.25 V at a constant current of 1C, then charged to a current of 0.05C at a constant voltage of 4.25 V, left standing for 5 minutes, and discharged to a lower limit of the cut-off voltage of 2.8 V at a constant current of 1C. This was the first charge/discharge cycle of the secondary batteries. The discharge capacities of this time were recorded as the discharge capacities of the first cycle of the lithium-ion batteries. At 45°C, the lithium-ion batteries were charged to 4.25 V at a constant current of 1C, then charged to a current of 0.05C at a constant voltage of 4.25 V, left standing for 5 minutes, and discharged to a lower limit of the cut-off voltage of 2.8 V at a constant current of 1C. Under the foregoing charge-discharge conditions, cyclic charge-discharge was performed until the lithium-ion batteries reached the cut-off condition of 80% capacity retention rate, and the cycle numbers of the secondary batteries were obtained under the condition of 80% capacity retention rate.

5. High-temperature storage performance test

At 60°C, the lithium-ion batteries were charged to a voltage of 4.25 V at a constant current of 1C, and then charged to a current of 0.05C at a constant voltage of 4.25 V. The volumes of the lithium-ion batteries at that time were measured by using the drainage method and recorded as V21. Then the lithium-ion batteries were put into an incubator at 60°C and taken out after 30 days of storage. The volumes of the lithium-ion batteries at this time were measured and recorded as V22. Volume swelling ratio (%) of the lithium-ion battery stored at 60°C for 100 days=[(V22-V21)/V21]×100.

**Table 1**

| Number | OI value of negative electrode active material | Median particle size by volume Dv50 of negative electrode active material ($\mu$m) | CW of negative electrode (mg/cm$^2$) | Compacted density of negative electrode active material layer (g/cm$^3$) | Type of negative electrode active material | OI value of negative electrode active material layer |
|---|---|---|---|---|---|---|
| Comparative Example 1 | 3.2 | 11.1 | 8 | 1.6 | Artificial graphite | 7 |
| Comparative Example 2 | 3.2 | 11.1 | 8 | 1.6 | Artificial graphite | 7 |
| Comparative Example 3 | 7.3 | 15.2 | 8 | 1.6 | Artificial graphite | 40 |

(continued)

| Number | OI value of negative electrode active material | Median particle size by volume Dv50 of negative electrode active material (μm) | CW of negative electrode (mg/cm²) | Compacted density of negative electrode active material layer (g/cm³) | Type of negative electrode active material | OI value of negative electrode active material layer |
|---|---|---|---|---|---|---|
| Comparative Example 4 | 3.2 | 11.1 | 30 | 1.6 | Artificial graphite | 7 |
| Comparative Example 5 | 3.2 | 11.1 | 20 | 1.6 | Artificial graphite | 40 |
| Comparative Example 6 | 3.2 | 11.1 | 30 | 1.6 | Artificial graphite | 7 |
| Comparative Example 7 | 3.2 | 11.1 | 8 | 1.6 | Artificial graphite | 7 |
| Comparative Example 8 | 3.2 | 11.1 | 8 | 1.6 | Artificial graphite | 7 |
| Example 1 | 3.2 | 11.1 | 8 | 1.6 | Artificial graphite | 7 |
| Example 2 | 3.2 | 11.1 | 8 | 1.6 | Artificial graphite | 7 |
| Example 3 | 3.2 | 11.1 | 8 | 1.6 | Artificial graphite | 7 |
| Example 4 | 3.2 | 11.1 | 8 | 1.6 | Artificial graphite | 7 |
| Example 5 | 3.2 | 11.1 | 8 | 1.6 | Artificial graphite | 7 |
| Example 6 | 2.8 | 10.8 | 8 | 1.6 | Artificial graphite | 3 |
| Example 7 | 5.7 | 13.5 | 8 | 1.6 | Artificial graphite | 24 |
| Example 8 | 3.2 | 11.1 | 6.5 | 1.6 | Artificial graphite | 7 |
| Example 9 | 3.2 | 11.1 | 13 | 1.6 | Artificial graphite | 7 |
| Example 10 | 3.2 | 11.1 | 8 | 1.6 | Artificial graphite | 7 |
| Example 11 | 3.2 | 11.1 | 8 | 1.6 | Artificial graphite | 7 |
| Example 12 | 3.2 | 11.1 | 8 | 1.6 | Artificial graphite | 7 |
| Example 13 | 3.2 | 11.1 | 8 | 1.6 | Artificial graphite | 7 |
| Example 14 | 3.2 | 11.1 | 8 | 1.6 | Artificial graphite | 7 |
| Example 15 | 2.9 | 10.9 | 8 | 1.6 | Artificial graphite + 2wt% soft carbon | 4 |

(continued)

| Number | OI value of negative electrode active material | Median particle size by volume Dv50 of negative electrode active material ($\mu$m) | CW of negative electrode (mg/cm$^2$) | Compacted density of negative electrode active material layer (g/cm$^3$) | Type of negative electrode active material | OI value of negative electrode active material layer |
|---|---|---|---|---|---|---|
| Example 16 | 3.2 | 11.1 | 8 | 1.6 | Artificial graphite + 3wt% SiO | 7 |
| Example 17 | 3.2 | 11.1 | 8 | 1.6 | Artificial graphite | 7 |

**Table 2**

| Number | DMC (EA)/wt% | Percentage of LiPF$_6$ (NaPF$_6$) in electrolyte by mass (wt%) | Percentage of high-dielectric-constant solvent (wt%) | Percentage of other linear carbonates in the total solvent (wt%) | Type of negative electrode active material | OI value of negative electrode active material layer | CW of negative electrode (mg/cm$^2$) | Porosity | $\frac{B*C*P}{OI*CW}$ ($\times10^{-4}$) | Conductivity at 25°C (mS/cm) | Viscosity at 25°C (mPa·s) | 0-80%SOC charging capability at 35°C (min) | Cycle Life at 45°C (Cycles) | Volume swelling rate at 60°C |
|---|---|---|---|---|---|---|---|---|---|---|---|---|---|---|
| Comparative Example 1 | 0 | 13 | 30 | 70 | Artificial graphite | 7 | 8 | 40 | 0.00 | 8.35 | 3.3 | 13 | 1500 | 5% |
| Comparative Example 2 | 40 | 3 | 30 | 30 | Artificial graphite | 7 | 8 | 40 | 0.86 | 6 | 2 | 15 | 820 | 8% |
| Comparative Example 3 | 40 | 13 | 30 | 30 | Artificial graphite | 40 | 8 | 40 | 0.65 | 9.95 | 2.9 | 13.5 | 1400 | 9% |
| Comparative Example 4 | 40 | 13 | 30 | 30 | Artificial graphite | 7 | 30 | 10 | 0.93 | 9.95 | 2.9 | 13 | 1455 | 11% |
| Comparative Example 5 | 10 | 5 | 30 | 60 | Artificial graphite | 40 | 20 | 10 | 0.01 | 6.5 | 7.6 | 16 | 540 | 6% |
| Comparative Example 6 | 40 | 13 | 30 | 30 | Artificial graphite | 7 | 30 | 40 | 0.99 | 9.95 | 2.9 | 16 | 1450 | 8% |
| Comparative Example 7 | 70 | 30 | 30 | 30 | Artificial graphite | 7 | 8 | 40 | 15 | 8.2 | 8.1 | 15 | 600 | 14% |
| Comparative Example 8 | 40 | 13 | 10 | 50 | Artificial graphite | 7 | 8 | 40 | 3.71 | 7.15 | 2 | 13 | 1300 | 5% |
| Example 1 | 20 | 13 | 30 | 50 | Artificial graphite | 7 | 8 | 40 | 1.86 | 9.08 | 3 | 10.8 | 1580 | 7% |

| Number | DMC (EA)/wt% | Percentage of LiPF$_6$ (NaPF$_6$) in electrolyte by mass (wt%) | Percentage of high-dielectric-constant solvent (wt%) | Percentage of other linear carbonates in the total solvent (wt%) | Type of negative electrode active material | OI value of negative electrode active material layer | CW of negative electrode (mg/cm$^2$) | Porosity | $\frac{B*C*P}{OI*CW}$ (×10$^{-4}$) | Conductivity at 25°C (mS/cm) | Viscosity at 25°C (mPa·s) | 0-80%SOC charging capability at 35°C (min) | Cycle Life at 45°C (Cycles) | Volume swelling rate at 60°C |
|---|---|---|---|---|---|---|---|---|---|---|---|---|---|---|
| Example 2 | 40 | 13 | 30 | 30 | Artificial graphite | 7 | 8 | 40 | 3.71 | 9.95 | 2.9 | 10.2 | 1730 | 10% |
| Example 3 | 70 | 13 | 30 | / | Artificial graphite | 7 | 8 | 40 | 6.50 | 11.28 | 2.71 | 9.6 | 1880 | 14% |
| Example 4 | 40 | 10 | 30 | 30 | Artificial graphite | 7 | 8 | 40 | 2.86 | 8.8 | 2.6 | 10.7 | 1520 | 9.5% |
| Example 5 | 40 | 23 | 30 | 30 | Artificial graphite | 7 | 8 | 40 | 6.57 | 8.2 | 7 | 11 | 1510 | 11% |
| Example 6 | 40 | 13 | 30 | 30 | Artificial graphite | 3 | 8 | 40 | 8.67 | 9.95 | 2.9 | 9.5 | 1550 | 10.8% |
| Example 7 | 40 | 13 | 30 | 30 | Artificial graphite | 24 | 8 | 40 | 1.08 | 9.95 | 2.9 | 11.2 | 1570 | 9.5% |
| Example 8 | 40 | 13 | 30 | 30 | Artificial graphite | 7 | 6.5 | 40 | 4.57 | 9.95 | 2.9 | 9 | 1510 | 9.3% |
| Example 9 | 40 | 13 | 30 | 30 | Artificial graphite | 7 | 13 | 40 | 2.29 | 9.95 | 2.9 | 11.2 | 1550 | 10.3% |
| Example 10 | 40 | 13 | 30 | 30 | Artificial graphite | 7 | 8 | 20 | 1.86 | 9.95 | 2.9 | 11.5 | 1550 | 8.9% |
| Example 11 | 40 | 13 | 30 | 30 | Artificial graphite | 7 | 8 | 60 | 5.57 | 9.95 | 2.9 | 9.4 | 1750 | 10.1% |

| Number | DMC (EA)/wt% | Percentage of LiPF$_6$ (NaPF$_6$) in electrolyte by mass (wt%) | Percentage of high-dielectric-constant solvent (wt%) | Percentage of other linear carbonates in the total solvent (wt%) | Type of negative electrode active material | OI value of negative electrode active material layer | CW of negative electrode (mg/cm$^2$) | Porosity | $\frac{B*C*P}{OI*CW}$ (×10$^{-4}$) | Conductivity at 25°C (mS/cm) | Viscosity at 25°C (mPa·s) | 0-80%SOC charging capability at 35°C (min) | Cycle Life at 45°C (Cycles) | Volume swelling rate at 60°C |
|---|---|---|---|---|---|---|---|---|---|---|---|---|---|---|
| Example 12 | 40 EA) | 13 | 30 | 30 | Artificial graphite | 7 | 8 | 40 | 3.71 | 11.8 | 2.5 | 8.5 | 1500 | 10% |
| Example 13 | 20 | 13 | 30 | 50 | Artificial graphite | 7 | 8 | 40 | 1.86 | 9.05 | 3.05 | 10.8 | 1720 | 6% |
| Example 14 | 40 | 13 | 50 | 10 | Artificial graphite | 7 | 8 | 40 | 3.71 | 10.5 | 4.5 | 12 | 1500 | 15% |
| Example 15 | 40 | 13 | 30 | 30 | Artificial graphite + 2wt% soft carbon | 4 | 8 | 40 | 6.5 | 9.95 | 2.9 | 9.5 | 1700 | 10% |
| Example 16 | 40 | 13 | 30 | 30 | Artificial graphite + 3wt% SiO | 7 | 8 | 40 | 3.71 | 9.95 | 2.9 | 10.3 | 1600 | 10.1% |
| Example 17 | 20 | 13 (NaPF$_6$) | 30 | 50 | Artificial graphite | 7 | 8 | 40 | 1.86 | 9.00 | 3 | 10.2 | 1500 | 9% |

It can be seen from comparison between Examples 1 to 17 and Comparative Examples 1 to 8 in Table 2 that when the lithium-ion batteries satisfy the foregoing relational expression, the lithium-ion batteries have excellent rate performance, and also have excellent cycling performance and good high-temperature storage performance.

It can be seen from the comparison between Example 2 and Example 14 and Comparative Example 8 that when the percentages of the high-dielectric-constant solvents are lower than the range of this application, the rate performance and cycling performance (especially the cycling performance) of the lithium-ion batteries are significantly reduced. It can be seen from the comparison between Example 2 and Example 14 that although the high-dielectric-constant solvents can improve the rate performance of the battery, when the percentages of the high-dielectric-constant solvents are greater than the preferred range of this application (20%-40%), the rate performance, cycling performance, and high-temperature storage performance of the lithium-ion battery in Example 14 are slightly poorer than those in Example 2 in which the percentage of the high-dielectric-constant solvent falls within the preferred range of this application.

It should be noted that this application is not limited to the foregoing Examples. The foregoing embodiments are merely examples, and embodiments having constructions substantially the same as those of the technical idea and having the same effects as the technical idea within the scope of the technical solutions of this application are all included in the technical scope of this application. In addition, within the scope without departing from the essence of this application, various modifications that can be conceived by persons skilled in the art are applied to the embodiments, and other modes constructed by combining some of the constituent elements in the embodiments are also included in the scope of this application.

ALTERNATIVE EMBODIMENTS

Alternative embodiments are set out in the following clauses.

1. A secondary battery, comprising an electrolyte and a negative electrode, wherein

the electrolyte comprises a low-viscosity solvent, an electrolyte salt, and a high-dielectric-constant solvent;
a viscosity of the low-viscosity solvent at 25°C is 0.3 mPa·s-0.6 mPa·s;
a dielectric constant of the high-dielectric-constant solvent is 30 F/m-100 F/m, and a percentage of the high-dielectric-constant solvent in total solvent in the electrolyte by mass is higher than 20%; and
the negative electrode comprises a negative electrode current collector and a negative electrode active material layer disposed on at least one surface of the negative electrode current collector; and
the secondary battery satisfies the following relational expression:

$$1\times10^{-4}\leq\frac{B\times C\times P}{OI\times CW}\leq 1\times10^{-3}$$

wherein B is a percentage of the low-viscosity solvent in total solvent in the electrolyte by mass; C is a percentage of the electrolyte salt in the electrolyte by mass; P is a porosity of the negative electrode active material layer; CW is a coating weight of the negative electrode active material layer, measured in $mg/cm^2$; and OI is an orientation index of the negative electrode active material layer; and
OI=C004/C110, C004 is a peak area of a 004 characteristic diffraction peak in an X-ray diffraction pattern of the negative electrode active material layer, and C110 is a peak area of a 110 characteristic diffraction peak in the X-ray diffraction pattern of the negative electrode active material layer.

2. The secondary battery according to clause 1, wherein the low-viscosity solvent comprises at least one solvent selected from dimethyl carbonate (DMC), ethyl acetate (EA), methyl acetate (MA), and acetonitrile (ACN).

3. The secondary battery according to clause 1 or 2, wherein the percentage B of the low-viscosity solvent in total solvent in the electrolyte by mass is 10%-80%, and optionally, 20%-70%.

4. The secondary battery according to any one of clauses 1 to 3, wherein the percentage C of the electrolyte salt in the electrolyte by mass is 10%-23%, and optionally, 13%-20%.

5. The secondary battery according to any one of clauses 1 to 4, wherein the high-dielectric-constant solvent comprises cyclic carbonate, optionally, the cyclic carbonate comprises at least one cyclic carbonate selected from ethylene carbonate, propylene carbonate, 1,2-butylene carbonate, 2,3-butylene carbonate, 1,2-pentylene carbonate, 2,3-pentylene carbonate, and fluoroethylene carbonate.

6. The secondary battery according to any one of clauses 1 to 5, wherein the percentage C of the high-dielectric-constant solvent in the total solvent in the electrolyte by mass is 20%-40%.

7. The secondary battery according to any one of clauses 1 to 6, wherein the electrolyte further comprises at least one electrolyte selected from diethyl carbonate, methyl ethyl carbonate, methyl propyl carbonate, ethyl propyl carbonate, methyl butyl carbonate, methyl propionate, and ethyl propionate.

8. The secondary battery according to any one of clauses 1 to 7, wherein the electrolyte further comprises a film-forming additive, and
the film-forming additive comprises at least one additive selected from vinylene carbonate, fluoroethylene carbonate, lithium difluorobisoxalate phosphate, 1,3-propane sultone, lithium difluorophosphate, lithium bisfluorooxalate borate, nitrile compound, and cyclic sulfate, and optionally, the cyclic sulfate is ethylene sulfate.

9. The secondary battery according to any one of clauses 1 to 8, wherein a conductivity of the electrolyte at 25°C is 8 mS/cm-16 mS/cm.

10. The secondary battery according to any one of clauses 1 to 9, wherein a viscosity of the electrolyte at 25°C is 1 mPa·s-7 mPa·s.

11. The secondary battery according to any one of clauses 1 to 10, wherein an OI value of the negative electrode active material layer is 3-24, and optionally, 8-24.

12. The secondary battery according to any one of clauses 1 to 11, wherein a coating weight CW of the negative electrode active material layer is 6.5 mg/cm$^2$-19.5 mg/cm$^2$, and optionally, 6.5 mg/cm$^2$-13 mg/cm$^2$.

13. The secondary battery according to any one of clauses 1 to 12, wherein a porosity P of the negative electrode active material layer is 20%-60%.

14. The secondary battery according to any one of clauses 1 to 13, wherein the electrolyte salt comprises at least one electrolyte salt selected from $LiPF_6$, $LiBF_4$, $LiN(SO_2F)_2$ (LiFSI), $LiN(CF_3SO_2)_2$ (LiTFSI), $LiClO_4$, $LiAsF_6$, $LiB(C_2O_4)_2$ (LiBOB), and $LiBF_2C_2O_4$ (LiDFOB).

15. The secondary battery according to any one of clauses 1 to 13, wherein the electrolyte salt comprises at least one electrolyte salt selected from $NaPF_6$, $NaClO_4$, $NaBCl_4$, $NaSO_3CF_3$, and $Na(CH_3)C_6H_4SO_3$.

16. The secondary battery according to any one of clauses 1 to 14, wherein the negative electrode active material comprises at least one material selected from artificial graphite, natural graphite, soft carbon, hard carbon, and a silicon-based material, and optionally, the silicon-based material comprises at least one material selected from elemental silicon, silicon oxide, silicon carbon composite, and silicon-based alloy.

17. The secondary battery according to clause 15, wherein the negative electrode active material comprises at least one material selected from natural graphite, modified graphite, artificial graphite, graphene, carbon nanotubes, carbon nanofibers, porous carbon, tin, antimony, germanium, lead, ferric oxide, vanadium pentoxide, tin dioxide, titanium dioxide, trioxide molybdenum, elemental phosphorus, sodium titanate, and sodium terephthalate

18. The secondary battery according to clause 16, wherein a percentage of the silicon-based material in the total negative electrode active material by mass is 0%-30%, and optionally, 0%-10%.

19. The secondary battery according to any one of clauses 1 to 14 and clause 16 or 18, wherein the secondary battery further comprises a positive electrode, and

the positive electrode comprises a positive electrode active material with a molecular formula of $LiNi_xCo_yMn_zM_{1-x-y-z}O_2$, wherein $0 \leq x \leq 1$, $0 \leq y \leq 0.5$, $0 \leq z \leq 0.5$, and $x+y+z=1$, optionally, $0.5 \leq x \leq 0.9$, $0 \leq y \leq 0.3$, and $0 \leq z \leq 0.3$, and M is at least one selected from Zr, Al, Mg, Sb, Fe, Cu, and W.

20. The secondary battery according to any one of clauses 1 to 13 and clause 15 or 17, wherein the secondary battery further comprises a positive electrode, and

the positive electrode comprises at least one positive electrode active materials selected from the following positive electrode active materials: layered transition metal oxide, polyanionic compound, Prussian blue compound, sulfide, nitride, carbide, and titanate.

21. An electric apparatus, comprising the secondary battery according to any one of clauses 1 to 20.

**Claims**

1. A secondary battery (5), comprising an electrolyte and a negative electrode, wherein

the electrolyte comprises a low-viscosity solvent, and a viscosity of the low-viscosity solvent at 25°C is 0.3 mPa·s-0.6 mPa·s;

the low-viscosity solvent comprises at least one solvent selected from dimethyl carbonate, DMC, ethyl acetate, EA, methyl acetate, MA, and acetonitrile, ACN;

the percentage of the low-viscosity solvent in total solvent in the electrolyte by mass is 20%-80%;

the electrolyte comprises cyclic carbonate, and the percentage of the cyclic carbonate in the total solvent in the electrolyte by mass is 20%-40%;

the electrolyte comprises an electrolyte salt, and the percentage of the electrolyte salt in the electrolyte by mass is 10%-23%,

the negative electrode comprises a negative electrode current collector and a negative electrode active material layer disposed on at least one surface of the negative electrode current collector, a porosity P of the negative electrode active material layer is 20%-60%, an OI value of the negative electrode active material layer is 3-24, a coating weight CW of the negative electrode active material layer is 6.5 mg/cm$^2$-19.5 mg/cm$^2$;

negative electrode active material layer comprises negative electrode active material, and the negative electrode active material comprises artificial graphite; and

OI=C004/C110, C004 is a peak area of a 004 characteristic diffraction peak in an X-ray diffraction pattern of the negative electrode active material layer, and C110 is a peak area of a 110 characteristic diffraction peak in the X-ray diffraction pattern of the negative electrode active material layer.

2. The secondary battery (5) according to claim 1, wherein the percentage of the low-viscosity solvent in total solvent in the electrolyte by mass is 20%-70%, and optionally, 40%-70%.

3. The secondary battery (5) according to claim 1 or 2, wherein the cyclic carbonate comprises at least one cyclic carbonate selected from ethylene carbonate, propylene carbonate, 1,2-butylene carbonate, 2,3-butylene carbonate, 1,2-pentylene carbonate, 2,3-pentylene carbonate, and fluoroethylene carbonate.

4. The secondary battery (5) according to any one of claims 1 to 3, wherein the percentage of the cyclic carbonate in the total solvent in the electrolyte by mass is 20%-35%.

5. The secondary battery (5) according to claim 4, wherein the percentage of the cyclic carbonate in the total solvent in the electrolyte by mass is 25%-34%.

6. The secondary battery (5) according to any one of claims 1 to 5, wherein the electrolyte further comprises at least one electrolyte selected from diethyl carbonate, methyl ethyl carbonate, methyl propyl carbonate, ethyl propyl carbonate, methyl butyl carbonate, methyl propionate, and ethyl propionate.

7. The secondary battery (5) according to any one of claims 1 to 6, wherein the electrolyte further comprises a film-forming component, and
the film-forming component comprises at least one component selected from vinylene carbonate, fluoroethylene carbonate, lithium difluorobisoxalate phosphate, 1,3-propane sultone, lithium difluorophosphate, lithium bisfluorooxalate borate, nitrile compound, and cyclic sulfate, and optionally, the cyclic sulfate is ethylene sulfate.

8. The secondary battery (5) according to any one of claims 1 to 7, wherein a conductivity of the electrolyte at 25°C is 8 mS/cm-16 mS/cm.

9. The secondary battery (5) according to any one of claims 1 to 8, wherein a viscosity of the electrolyte at 25°C is 1 mPa·s-7 mPa·s.

10. The secondary battery (5) according to any one of claims 1 to 9, wherein a coating weight CW of the negative electrode active material layer is 6.5 mg/cm$^2$-13 mg/cm$^2$.

11. The secondary battery (5) according to any one of claims 1 to 10, wherein a porosity P of the negative electrode active material layer is 20%-55%, and optionally, 20%-50%.

12. The secondary battery (5) according to any one of claims 1 to 11, wherein the electrolyte salt comprises at least one electrolyte salt selected from $LiPF_6$, $LiBF_4$, $LiN(SO_2F)_2$ (LiFSI), $LiN(CF_3SO_2)_2$ (LiTFSI), $LiClO_4$, $LiAsF_6$, $LiB(C_2O_4)_2$ (LiBOB), and $LiBF_2C_2O_4$ (LiDFOB).

13. The secondary battery (5) according to any one of claims 1 to 12, wherein a charging time required for charging the secondary battery for 0-80%SOC is determined by a rate performance test performed at 35°C.

14. The secondary battery (5) according to any one of claims 1 to 11, wherein the secondary battery further comprises a positive electrode, and
the positive electrode comprises a positive electrode active material with a molecular formula of $LiNi_xCo_yMn_zM_{1-x-y-z}O_2$, wherein $0 \le x \le 1$, $0 \le y \le 0.5$, $0 \le z \le 0.5$, and $x+y+z=1$, optionally, $0.5 \le x \le 0.9$, $0 \le y \le 0.3$, and $0 \le z \le 0.3$, and M is at least one selected from Zr, Al, Mg, Sb, Fe, Cu, and W.

15. The secondary battery (5) according to any one of claims 1 to 12, wherein the secondary battery further comprises a positive electrode, and
the positive electrode comprises at least one positive electrode active materials selected from the following positive electrode active materials: layered transition metal oxide, polyanionic compound, Prussian blue compound, sulfide, nitride, carbide, and titanate.

FIG. 1

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113097429 A
- CN 113036298 A
- CN 111653829 A

- CN 108847489 B
- GB T27901995 A